# EUROPEAN PATENT APPLICATION

(11) **EP 4 116 028 A1**
(43) Date of publication of application: **11.01.2023**
(21) Application number: 22169461.5
(22) Date of filing: 22.04.2022
(51) Int. Cl.: B23K 26/03, B23K 26/21

(54) **LASER WELDING SYSTEM AND LASER WELDING CONTROL METHOD**

(30) Priority: 28.05.2021 JP 2021090126
(71) Applicant: TOYOTA JIDOSHA KABUSHIKI KAISHA, Toyota-shi, Aichi-ken, 471-8571 (JP)
(72) Inventor: OKAZAKI, Tomoya, Toyota-shi,, 471-8571 (JP); HARA, Yuki, Toyota-shi, 471-8571 (JP)
(74) Representative: J A Kemp LLP

(57) **Abstract**

A laser welding system includes: a laser irradiation unit (101) configured to irradiate an object to be welded with a laser beam (LB); a temperature distribution measurement unit (103) configured to measure a temperature distribution of a molten pool (MP) formed in the object to be welded by the irradiation of the laser beam (LB); a convection analysis unit (104) configured to analyze a state of convection of the molten pool (MP) based on the temperature distribution of the molten pool (MP) measured by the temperature distribution measurement unit (103); and a laser control unit (107) configured to control an irradiation condition of the laser beam (LB). When the state of convection of the molten pool (MP) analyzed by the convection analysis unit (104) corresponds to a predetermined spatter generation mode, the laser control unit (107) changes the irradiation condition of the laser beam (LB) so that the state of convection of the molten pool (MP) is not in the spatter generation mode.

## Description

### BACKGROUND

The present disclosure relates to a laser welding system and a laser welding control method.

Japanese Unexamined Patent Application Publication No. H7-284931 discloses a technique in which light reflected from a material surface of a monitoring light beam is received by a light receiving element, and changes in output during a melting process of the light receiving element are detected, to thereby monitor a molten state of the material during the melting process.

### SUMMARY

The inventors have found the following problem regarding a laser welding system.

In laser welding, spatter generated from a molten pool may be adhered to or mixed with a welding member as foreign matter and thus adversely affect the welding member, and therefore it is desirable to prevent the generation of spatter as much as possible.

However, the generation of spatter in laser welding cannot be effectively prevented only by monitoring the molten pool using the technique disclosed in Japanese Unexamined Patent Application Publication No. H7-284931.

The present disclosure has been made in view of the above-described circumstances, and an object thereof is to provide a laser welding system capable of more effectively preventing the generation of spatter.

A first exemplary aspect is a laser welding system including:
a laser irradiation unit configured to irradiate an object to be welded with a laser beam;
a temperature distribution measurement unit configured to measure a temperature distribution of a molten pool formed in the object to be welded by the irradiation of the laser beam;
a convection analysis unit configured to analyze a state of convection of the molten pool based on the temperature distribution of the molten pool measured by the temperature distribution measurement unit; and
a laser control unit configured to control an irradiation condition of the laser beam,
in which when the state of convection of the molten pool analyzed by the convection analysis unit corresponds to a predetermined spatter generation mode, the laser control unit changes the irradiation condition of the laser beam so that the state of convection of the molten pool is not in the spatter generation mode.

The laser welding system according to the first exemplary aspect includes a temperature distribution measurement unit configured to measure a temperature distribution of a molten pool, and a convection analysis unit configured to analyze a state of convection of the molten pool based on the temperature distribution of the molten pool measured by the temperature distribution measurement unit. Further, when the state of convection of the molten pool analyzed by the convection analysis unit corresponds to a predetermined spatter generation mode, the laser control unit changes the irradiation condition of the laser beam so that the state of convection of the molten pool is not in the spatter generation mode. Therefore, the laser welding system according to the first exemplary aspect can more effectively prevent the generation of spatter.

The laser welding system according to the first exemplary aspect may further include: an image capturing unit configured to capture a state of generation of spatter of the molten pool; and a storage unit configured to store the state of generation of spatter of the molten pool captured by the image capturing unit and the state of convection of the molten pool analyzed by the convection analysis unit so that they are associated with each other, in which the spatter generation mode may be predetermined based on the state of generation of spatter and the state of convection that are stored in the storage unit so that they are associated with each other.

Another exemplary aspect is a laser welding control method including:
measuring a temperature distribution of a molten pool formed in an object to be welded by irradiation of a laser beam;
analyzing a state of convection of the molten pool based on the measured temperature distribution; and
changing, when the analyzed state of convection of the molten pool corresponds to a predetermined spatter generation mode, an irradiation condition of the laser beam so that the state of convection of the molten pool is not in the spatter generation mode.

In the laser welding control method according to the other exemplary aspect, a temperature distribution of a molten pool formed in an object to be welded by irradiation of a laser beam is measured, and a state of convection of the molten pool is analyzed based on the measured temperature distribution of the molten pool. Further, when the state of convection of the molten pool corresponds to a predetermined spatter generation mode, an irradiation condition of the laser beam is changed so that the state of convection of the molten pool is not in the spatter generation mode.

Therefore, in the laser welding control method according to the other exemplary aspect, the generation of spatter can be more effectively prevented.

The laser welding control method according to the other exemplary aspect may further include: capturing a state of generation of spatter of the molten pool; and storing the captured state of generation of spatter of the molten pool and the analyzed state of convection of the molten pool so that they are associated with each other, in which the spatter generation mode may be predetermined based on the state of generation of spatter and the state of convection that are stored so that they are associated with each other.

According to the present disclosure, it is possible to provide a laser welding system capable of more effectively preventing the generation of spatter.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a block diagram showing a laser welding system according to a first embodiment;
Fig. 2 is a schematic configuration diagram of a galvano scanner 102;
Fig. 3 is a diagram showing an example of an actual result of measurement of a temperature distribution of a molten pool MP by a temperature distribution measurement unit 103;
Fig. 4 is a diagram showing an example of a result of analysis of a state of convection of the molten pool MP by a convection analysis unit 104; and
Fig. 5 is a flowchart showing a laser welding control method according to the first embodiment.

### DESCRIPTION OF EMBODIMENTS

A specific embodiment to which the present disclosure is applied will be described hereinafter in detail with reference to the drawings. However, the present disclosure is not limited to the following embodiment. Further, for the clarification of the description, the following descriptions and the drawings are simplified as appropriate.

### (First Embodiment)

### <Configuration of Laser Welding System>

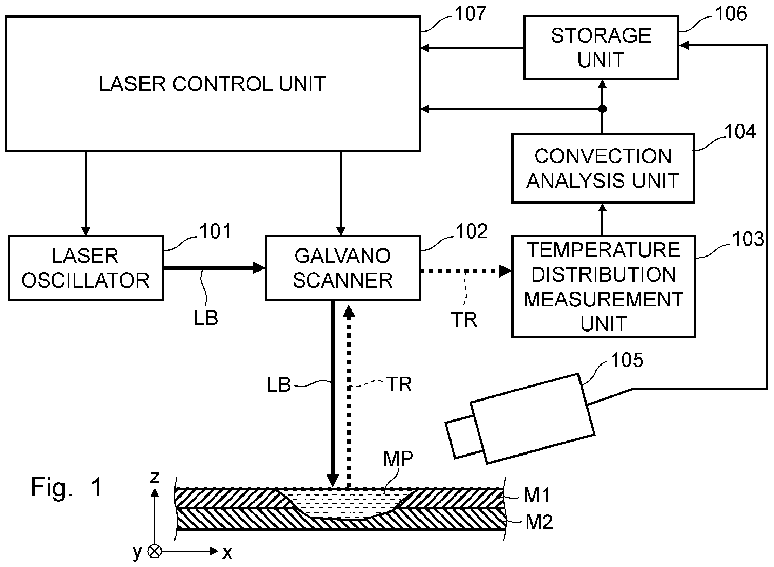

First, a laser welding system according to a first embodiment will be described with reference to Fig. 1. Fig. 1 is a block diagram showing the laser welding system according to the first embodiment. As shown in Fig. 1, in the laser welding system according to this embodiment, two metal plates M1 and M2, which are stacked, are irradiated with a laser beam LB from above, whereby a molten pool MP which extends over the two metal plates M1 and M2 is formed and thus the two metal plates M1 and M2 are welded.

As shown in Fig. 1, the laser welding system according to this embodiment includes a laser oscillator 101, a galvano scanner 102, a temperature distribution measurement unit 103, a convection analysis unit 104, an image capturing unit 105, a storage unit 106, and a laser control unit 107.

Note that it is needless to say that right-handed xyz orthogonal coordinates shown in Fig. 1 and other drawings are merely for convenience of describing the positional relation of the components. Normally, a z-axis positive direction is vertically upward and a xy plane is a horizontal plane, which are the same throughout the drawings.

The metal plates M1 and M2, which are objects to be welded, are plates made of, for example, copper, aluminum, or alloys thereof, but are not limited to being made of any particular material. The metal plates M1 and M2 are made of, for example, the same kinds of metal, but may instead be made of different kinds of metal.

Note that, in the example shown in Fig. 1, although the two metal plates M1 and M2 are stacked and then welded, the method for welding these plates is not limited to this. These plates may instead be butted and then welded, or may instead be welded by using other methods.

The laser oscillator 101 oscillates the laser beam LB by a laser output based on a control signal output from the laser control unit 107. The laser beam LB output from the laser oscillator 101 is input to the galvano scanner 102.

The laser oscillator 101 and the galvano scanner 102 constitute a laser irradiation unit that irradiates the metal plates M1 and M2, which are objects to be welded, with the laser beam LB.

The galvano scanner 102 irradiates the metal plates M1 and M2, which are objects to be welded, with the laser beam LB while scanning over the metal plates M1 and M2 based on the control signal output from the laser control unit 107. For example, a diameter, a scanning speed, and a trajectory of the laser beam LB irradiated from the galvano scanner 102 are determined based on the control signal output from the laser control unit 107.

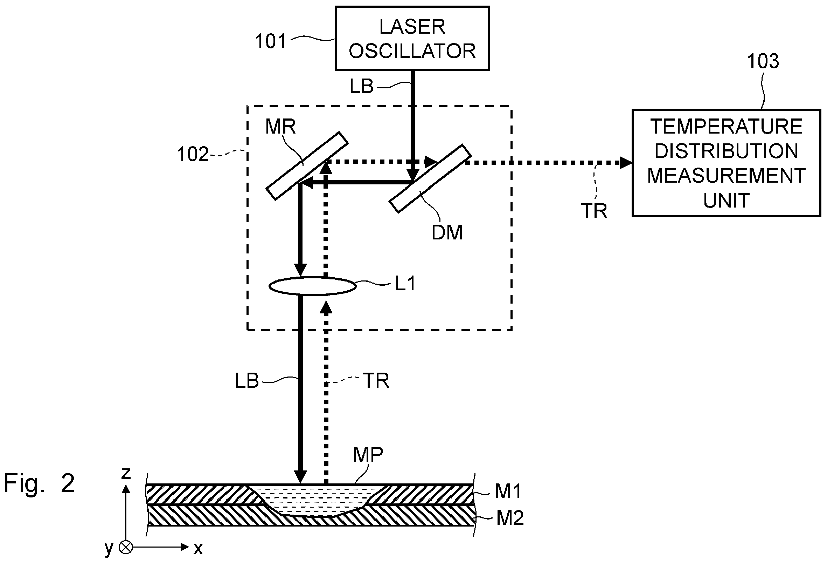

Fig. 2 is a schematic configuration diagram of the galvano scanner 102. Note that the configuration of the galvano scanner 102 shown in Fig. 2 is merely an example, and the configuration of the galvano scanner 102 is not limited to this configuration.

The galvano scanner 102 shown in Fig. 2 includes a dichroic mirror DM, a mirror MR, and a lens L1. Here, the dichroic mirror DM reflects the laser beam LB and transmits a thermal radiation light TR. After the laser beam LB incident from the laser oscillator 101 is reflected by the dichroic mirror DM and the mirror MR, the laser beam LB is concentrated by the lens L1 and emitted from the galvano scanner 102.

The metal plates M1 and M2 are irradiated with the laser beam LB emitted from the galvano scanner 102, whereby the molten pool MP is formed.

Meanwhile, as shown in Fig. 2, the thermal radiation light TR emitted from the molten pool MP is incident on the temperature distribution measurement unit 103 via the galvano scanner 102. More specifically, in the galvano scanner 102, after the thermal radiation light TR is reflected by the mirror MR via the lens L1, the thermal radiation light TR transmitted through the dichroic mirror DM is incident on the temperature distribution measurement unit 103.

Referring back to Fig. 1, the description will be continued.

The temperature distribution measurement unit 103 sequentially measures a temperature distribution of the molten pool MP based on an intensity of the thermal radiation light TR emitted from the molten pool MP. The higher the temperature in the molten pool MP, the higher the intensity of the thermal radiation light TR emitted from the molten pool MP.

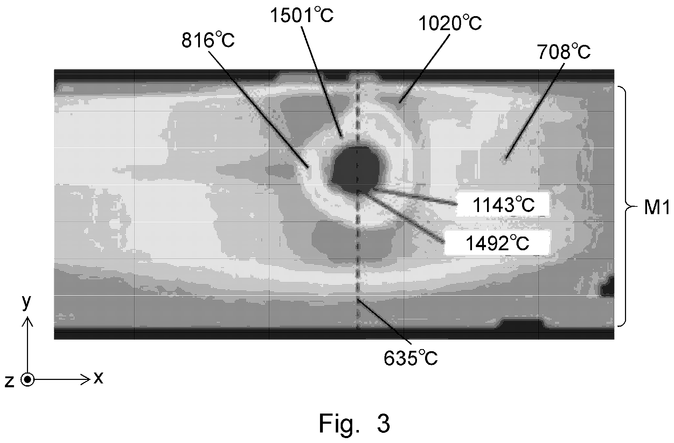

Fig. 3 is a diagram showing an example of an actual result of measurement of a temperature distribution of the molten pool MP by the temperature distribution measurement unit 103. In the example of Fig. 3, the metal plates M1 and M2 are both copper plates (the melting point: 1085°C). In Fig. 3, since the temperature distribution is measured from the upper side (the z-axis direction positive side), the temperature distribution of the metal plate M1 is shown. In Fig. 3, the temperature distribution of the metal plate M1 is shown by colors.

Note that, in Fig. 3, numerical values of measured temperatures are shown in some places. Further, a broken line in Fig. 3 is a reference line indicating an irradiation position of the laser beam LB.

The convection analysis unit 104 analyzes the state of convection of the molten pool MP based on the sequential change of the temperature distribution measured by the temperature distribution measurement unit 103. For example, a commercially available thermo-fluid analysis program can be used for a convection analysis performed by the convection analysis unit 104, but the program used for this analysis is not limited to the above program. Examples of commercially available thermo-fluid analysis programs include STAR-CCM+ (Registered Trademark) and FLOW-3D (Registered Trademark). The state of convection of the molten pool MP analyzed by the convection analysis unit 104 is stored in the storage unit 106.

Note that, although not shown, the convection analysis unit 104 includes, for example, a calculation unit such as a Central Processing Unit (CPU), and a storage unit such as a Random Access Memory (RAM) and a Read Only Memory (ROM) in which a thermo-fluid analysis program, data, and the like are stored. That is, the convection analysis unit 104 has functions as a computer, and performs analysis processing based on the aforementioned thermo-fluid analysis program.

Therefore, the convection analysis unit 104 shown in Fig. 1 can be configured by the CPU, the storage unit, and other circuits in terms of hardware, and can be implemented by the thermo-fluid analysis program and the like stored in the storage unit in terms of software. That is, the convection analysis unit 104 can be implemented in various forms by hardware, software, or a combination thereof.

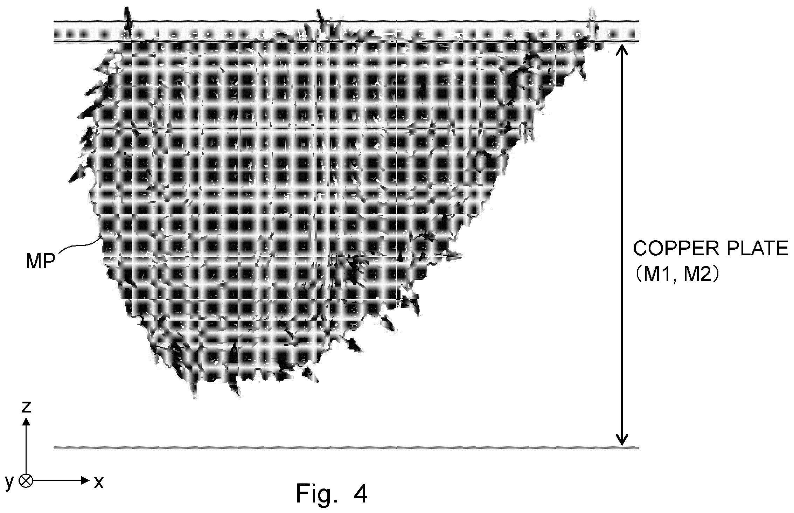

Fig. 4 is a diagram showing an example of a result of analysis of the state of convection of the molten pool MP by the convection analysis unit 104. In the example of Fig. 4, since the metal plates M1 and M2 are both copper plates, the metal plates M1 and M2 are integrally shown. Fig. 4 shows the state of convection of the molten pool MP in the xz cross section of the metal plates M1 and M2. An arrow in the molten pool MP indicates a direction of convection, and the color of the arrow indicates a magnitude of the flow velocity.

As shown in Fig. 1, the image capturing unit 105 captures the state of generation of spatter in the molten pool MP. The image capturing unit 105 is, for example, a high-speed camera and captures spatter generated from the molten pool MP during the irradiation of the laser beam LB. The state of generation of spatter captured by the image capturing unit 105 is output to the laser control unit 107 and stored in the storage unit 106.

At this time, the state of generation of spatter captured by the image capturing unit 105 is stored in the storage unit 106 so that it is associated with the convection state analyzed by the convection analysis unit 104. Then a spatter generation mode to be used by the laser control unit 107 to determine the state of convection is predetermined based on the state of generation of spatter. Therefore, the image capturing unit 105 is not essential when welding is actually performed, and is thus not essential to the laser welding system according to this embodiment.

As shown in Fig. 1, the storage unit 106 stores the state of generation of spatter of the molten pool MP captured by the image capturing unit 105 and the state of convection of the molten pool MP analyzed by the convection analysis unit 104 so that they are associated with each other.

Note that the storage unit 106 may be provided in the convection analysis unit 104 described above or the laser control unit 107 described later.

As shown in Fig. 1, the laser control unit 107 controls the laser oscillator 101 and the galvano scanner 102 based on the state of convection of the molten pool MP analyzed by the convection analysis unit 104. That is, the laser control unit 107 controls an irradiation condition of the laser beam LB. As described above, the laser control unit 107 controls the output (laser output) of the laser beam LB oscillated by the laser oscillator 101. Further, the laser control unit 107 controls the diameter, the scanning speed, and the trajectory of the laser beam LB irradiated from the galvano scanner 102.

Here, the laser control unit 107 determines whether or not the state of convection analyzed by the convection analysis unit 104 corresponds to a predetermined spatter generation mode. Note that the spatter generation mode is a state of convection in which spatter is likely to be generated. The spatter generation mode is predetermined by, for example, the laser control unit 107 based on the state of generation of spatter and the state of convection of the molten pool MP that are stored in the storage unit 106 so that they are associated with each other.

Then, when the laser control unit 107 determines that the state of convection corresponds to the spatter generation mode, the laser control unit 107 changes the irradiation condition of the laser beam LB so that the state of convection is not in the spatter generation mode. In other words, when the laser control unit 107 determines that the state of convection corresponds to the spatter generation mode, the laser control unit 107 changes the irradiation condition of the laser beam LB so that the state of convection shifts to a non-spatter generation mode. Note that the non-spatter generation mode is a state of convection in which spatter is less likely to be generated, that is, a state of convection that is not in the spatter generation mode.

When the laser control unit 107 determines that the state of convection corresponds to the spatter generation mode, the laser control unit 107 changes, for example, at least one of the laser output, the diameter of the laser beam LB, the scanning speed of the same, and the trajectory of the same.

On the other hand, when the laser control unit 107 determines that the state of convection does not correspond to the spatter generation mode, the laser control unit 107 maintains the irradiation condition of the laser beam LB as it is without changing it.

Note that, although not shown, the laser control unit 107 includes, for example, a calculation unit such as a Central Processing Unit (CPU), and a storage unit such as a Random Access Memory (RAM) and a Read Only Memory (ROM) in which various control programs, data, and the like are stored. That is, the laser control unit 107 has functions as a computer, and performs various control processes based on the aforementioned control programs.

Therefore, the laser control unit 107 shown in Fig. 1 can be configured by the CPU, the storage unit, and other circuits in terms of hardware, and can be implemented by various control programs and the like stored in the storage unit in terms of software. That is, the laser control unit 107 can be implemented in various forms by hardware, software, or a combination thereof.

As described above, the laser welding system according to this embodiment includes the temperature distribution measurement unit 103 that measures a temperature distribution of the molten pool MP, and the convection analysis unit 104 that analyzes a state of convection of the molten pool MP based on the temperature distribution of the molten pool MP measured by the temperature distribution measurement unit 103. Further, when the state of convection of the molten pool MP analyzed by the convection analysis unit 104 corresponds to a spatter generation mode, the laser control unit 107 changes an irradiation condition of the laser beam LB so that the state of convection of the molten pool MP is not in the spatter generation mode. Therefore, the laser welding system according to this embodiment can more effectively prevent the generation of spatter.

### <Laser Welding Control Method>

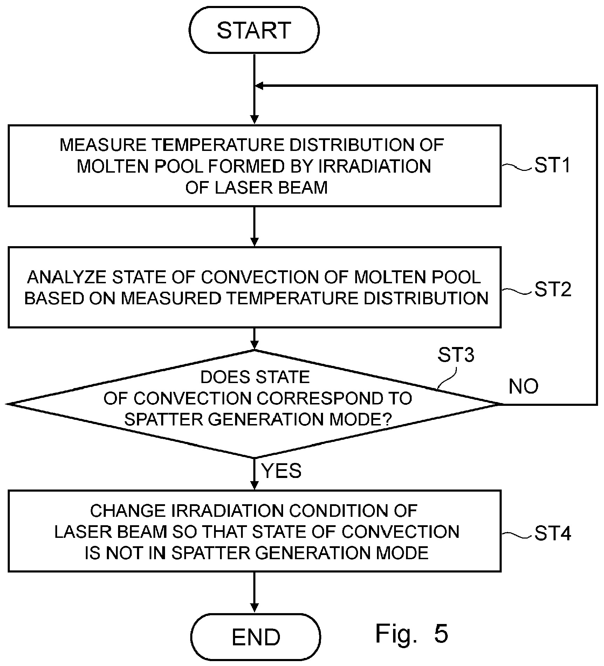

Next, a laser welding control method according to this embodiment will be described with reference to Fig. 5. Fig. 5 is a flowchart showing a laser welding control method according to the first embodiment.

First, as shown in Fig. 5, the temperature distribution measurement unit 103 measures a temperature distribution of the molten pool MP formed in the metal plates M1 and M2 to be welded by irradiation of the laser beam LB (Step ST1).

Next, as shown in Fig. 5, the convection analysis unit 104 analyzes a state of convection of the molten pool MP based on the temperature distribution of the molten pool MP measured by the temperature distribution measurement unit 103 (Step ST2).

Next, as shown in Fig. 5, the laser control unit 107 determines whether or not the state of convection analyzed by the convection analysis unit 104 corresponds to a spatter generation mode (Step ST3).

Note that the spatter generation mode is predetermined by, for example, the laser control unit 107 based on the state of generation of spatter and the state of convection of the molten pool MP that are stored in the storage unit 106 so that they are associated with each other.

If the laser control unit 107 determines that the state of convection corresponds to the spatter generation mode (YES in Step ST3), the laser control unit 107 changes the irradiation condition of the laser beam LB so that the state of convection is not in the spatter generation mode (Step ST4). Specifically, the laser control unit 107 changes at least one of the laser output, the diameter of the laser beam LB, the scanning speed of the same, and the trajectory of the same.

If the laser control unit 107 determines that the state of convection does not correspond to the spatter generation mode (NO in Step ST3), the laser control unit 107 maintains the irradiation condition of the laser beam LB as it is without changing it, and the process returns to Step ST1. That is, the laser control unit 107 continues to maintain the irradiation condition of the laser beam LB as it is without changing it until the laser control unit 107 determines that the state of convection corresponds to the spatter generation mode.

As described above, in the laser welding control method according to this embodiment, a temperature distribution of the molten pool MP formed in an object to be welded by irradiation of the laser beam LB is measured, and a state of convection of the molten pool MP is analyzed based on the temperature distribution. Further, when the state of convection of the molten pool MP corresponds to a spatter generation mode, an irradiation condition of the laser beam LB is changed so that the state of convection of the molten pool MP is not in the spatter generation mode. Therefore, in the laser welding control method according to this embodiment, the generation of spatter can be more effectively prevented.

In the above-described example, a program includes a set of instructions (or software codes) that, when loaded into a computer, causes the computer to perform one or more of the functions described in the embodiment. The program may be stored on a non-transitory computer readable medium or a tangible storage medium. As an example and not by way of limitation, computer readable media or tangible storage media include random-access memory (RAM), read-only memory (ROM), flash memory, solid-state drive (SSD), or other memory technologies, CD-ROM, a digital versatile disc (DVD), a Blu-ray (Registered Trademark) disk, or other optical disk storages, a magnetic cassette, a magnetic tape, a magnetic disk storage, or other magnetic storage devices. The program may be transmitted on a transitory computer readable medium or a communication medium. As an example and not by way of limitation, a transitory computer readable medium or a communication medium includes an electrical, optical, acoustic, or other form of propagation signal.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A laser welding system comprising:
a laser irradiation unit (101) configured to irradiate an object to be welded with a laser beam (LB);
a temperature distribution measurement unit (103) configured to measure a temperature distribution of a molten pool (MP) formed in the object to be welded by the irradiation of the laser beam (LB);
a convection analysis unit (104) configured to analyze a state of convection of the molten pool (MP) based on the temperature distribution of the molten pool (MP) measured by the temperature distribution measurement unit (103); and
a laser control unit (107) configured to control an irradiation condition of the laser beam (LB),
wherein when the state of convection of the molten pool (MP) analyzed by the convection analysis unit (104) corresponds to a predetermined spatter generation mode, the laser control unit (107) changes the irradiation condition of the laser beam (LB) so that the state of convection of the molten pool (MP) is not in the spatter generation mode.

2. The laser welding system according to Claim 1, further comprising:
an image capturing unit (105) configured to capture a state of generation of spatter of the molten pool (MP); and
a storage unit (106) configured to store the state of generation of spatter of the molten pool (MP) captured by the image capturing unit (105) and the state of convection of the molten pool (MP) analyzed by the convection analysis unit (104) so that they are associated with each other,
wherein the spatter generation mode is predetermined based on the state of generation of spatter and the state of convection that are stored in the storage unit (106) so that they are associated with each other.

3. A laser welding control method comprising:
measuring a temperature distribution of a molten pool (MP) formed in an object to be welded by irradiation of a laser beam (LB);
analyzing a state of convection of the molten pool (MP) based on the measured temperature distribution of the molten pool (MP); and
changing, when the analyzed state of convection of the molten pool (MP) corresponds to a predetermined spatter generation mode, an irradiation condition of the laser beam (LB) so that the state of convection of the molten pool (MP) is not in the spatter generation mode.

4. The laser welding control method according to Claim 3, further comprising:
capturing a state of generation of spatter of the molten pool (MP); and
storing the captured state of generation of spatter of the molten pool (MP) and the analyzed state of convection of the molten pool (MP) so that they are associated with each other,
wherein the spatter generation mode is predetermined based on the state of generation of spatter and the state of convection that are stored so that they are associated with each other.
